(19) Europäisches Patentamt / European Patent Office / Office européen des brevets

(11) **EP 2 535 803 A1**

(12) **EUROPEAN PATENT APPLICATION**
published in accordance with Art. 153(4) EPC

(43) Date of publication:
**19.12.2012 Bulletin 2012/51**

(51) Int Cl.:
*G06F 7/58* (2006.01)   *G06N 7/08* (2006.01)

(21) Application number: **09852480.4**

(22) Date of filing: **24.12.2009**

(86) International application number:
**PCT/ES2009/070629**

(87) International publication number:
**WO 2011/076962 (30.06.2011 Gazette 2011/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Telefónica, S.A.**
**28013 Madrid (ES)**

(72) Inventors:
- **ÁLVAREZ MARAÑÓN, Gonzalo**
  **E-28017 Madrid (ES)**
- **FERNÁNDEZ MÁRMOL, Verónica**
  **E-28006 Madrid (ES)**
- **HERNÁNDEZ ENCINAS, Luis**
  **E-28034 Madrid (ES)**
- **MONTOYA VITINI, Fausto**
  **E-28290 LAS MATAS (Madrid) (ES)**
- **ORÚE LÓPEZ, Amalia Beatriz**
  **E-28290 LAS MATAS (Madrid) (ES)**
- **PASTOR DÉGANO, Gerardo**
  **E-28002 Madrid (ES)**
- **ROMERA GARCÍA, Miguel Emilio**
  **E-28029 Madrid (ES)**

(74) Representative: **Gonzalez-Alberto Rodriguez, Natalia**
**GARRIGUES IP, S.L.P.**
**Hermosilla, 3**
**28001 Madrid (ES)**

(54) **METHOD AND SYSTEM FOR GENERATING UNPREDICTABLE PSEUDO-RANDOM NUMBERS**

(57) The invention relates to a system for generating unpredictable pseudorandom numbers in a chaotic manner, comprising discrete chaotic map processing means and an XOR gate for generating unpredictable pseudorandom numbers. The method is based on introducing a high degree of entropy in the system by cyclically shifting chaotic maps to the right.

FIG. 2

**Description**

Object of the Invention

As expressed in the title of this specification, the present invention relates to a method and to a system for generating sequences of unpredictable pseudorandom numbers in a chaotic manner. The main field of application is cryptography, which affords it a number of applications associated with all aspects relating to information security. For that purpose, the present invention comprises a system for generating sequences of unpredictable pseudorandom numbers based on a combination of discrete chaotic maps the association of which results in a powerful system for generating said numbers. Said generator is basically made up of a discrete chaotic map processor and an XOR gate performing the bit-by-bit modulo 2 addition of the result of processing discrete chaotic maps to obtain the pseudorandom numbers.

Background of the Invention

Cryptography is the science dedicated to studying all the aspects associated with information security, such as confidentiality, data integrity, entity authentication and source data authentication. There are a number of solutions in the state of the art implementing cryptographic applications based on known mathematical algorithms.

The solutions of the state of the art up until the present invention involve pseudorandom number generators (PRNG). The most well-known pseudorandom number generators include the following:

● Linear congruential generators (LCG), which are the most widely used generators for simulations and for implementing pseudorandom algorithms.
● Linear feedback shift register (LFSR) and its combinations, such as its non-linear combinations or its irregular synchronizations.
● Typical cryptographic primitive functions, such as AES, DES, SHA, etc., when their input is a counter.

The most typical problems when implementing a ciphering solution consist of finding a suitable compromise between the strength of the solution and the resources necessary for carrying out said solution. The solutions needing few resources are usually vulnerable to external attacks. Other solutions involving robust systems of ciphering consume a large amount of resources and often slow the system down.

The linear congruential generator is the most well-known, oldest and best studied algorithm of all those existing in the state of the art. It was proposed by Lehmer in 1949 and is among the fastest number algorithms. The main drawback of the linear congruential generator is that it is completely predictable if several samples generated by said generator are known.

Another solution is based on implementing generators based on linear feedback shift registers (LFSR). These are a type of generators that can be efficiently built by means of electronic circuits. This device is capable of generating long sequences of pseudorandom numbers with a perfect statistical distribution. The main drawback of this solution is that it is not secure enough given its linear character.

Given the low security provided by solutions based on linear feedback shift register (LFSR) generators, said solutions are often used as basic building blocks for more complex pseudorandom number generators.

Based on the solutions considered above, the alternatives found in the state of the art are based on more or less complex combinations of said solutions with other mechanisms which can often suffer the same limitations as the originals.

"Non-linear filtering" introducing non-linear functions in the output of LCG or LFSR generators is among the combinations indicated above. Another option is the "non-linear combination" of LFSR generators of different lengths of sequences of numbers generated in the feedback of the generator, such that the output is a function of part of the input states of all LFSR generators. Other solutions are "non-linear update" of the memory used by the generator or "irregular synchronization".

Therefore, it would be desirable to find a system for generating unpredictable pseudorandom numbers in a chaotic manner the implementation of which is low-cost in terms of resources, that is very strong against attacks and fast to generate said unpredictable pseudorandom numbers.

Description of the Invention

To achieve the objectives and avoid the drawbacks indicated above, the invention consists of a method and a system for generating unpredictable pseudorandom numbers, said system comprising an unpredictable pseudorandom number generator based on a combination of discrete chaotic maps.

The novel system of the present invention is capable of recursively generating unpredictable pseudorandom numbers forming a sequence quickly, with a low cost in resources and resistant to external attacks. It is possible to generate said sequences of random numbers with high bit rates. Furthermore, the sequences of pseudorandom numbers generated by the system of the present invention are completely unpredictable; when a limited portion of generated numbers is known, it is impossible to find out the numbers that were generated previously or estimate those that will be generated in the future. The present invention uses a "key" for generating unpredictable pseudorandom numbers which in no case can be discovered by deduction by means of mathematical analysis. This is because the inverse function of the multiple recursive function generating the sequence of unpredictable pseudorandom numbers is a multivalued function.

Another advantage of the present application is that it can be used as a one-way conversion function. It is also possible to apply it as a stream cipher device, such as a Message Authentication Code (MAC) generator device, or such as a device for generating One-time Passwords (OTP), among other cryptographic protocols. Furthermore, the sequences of numbers generated by the present invention show perfect random statistics, being indistinguishable from an authentic random sequence.

The system described in the present invention is based on a generator, which is based on a combined multiple recursion of several discrete chaotic dynamical subsystems, also referred to as discrete chaotic maps. The mechanism of combination consists of the bit-by-bit modulo 2 addition (XOR) of the output of each dynamical subsystem. The sequence of numbers generated is a non-reversible function of a set of several past numbers of the same sequence. The output $x_n$ in moment "n" is defined by the formula:

$$x_n = [f_1(x_{n-1})] \oplus [f_2(x_{n-2})] \oplus \ldots \oplus [f_j(x_{n-j})] \oplus \ldots \oplus [f_k(x_{n-k})];$$

wherein "$x_{n-j}$" is the number generated in a previous moment "n-j", "$x_{n-k}$" is the number generated in a previous moment "n-k", "$x_{n-2}$" is the number generated in a previous moment "n-2", "$x_{n-1}$" is the number generated in a previous moment "n-1 "; "k" is the total number of the different discrete chaotic maps involved, which must comply with k≥2; the function $f_j(x_{n-j})$ is the chaotic map "j" applied on the number generated in moment "n-j", 1≤j≤k and "$\oplus$"being the bit-by-bit modulo 2 addition (XOR).

Function $f_j(x_{n-j})$ is a discrete chaotic map defined as:

$$f_j(x_{n-j}) = [(a_j x_{n-j} + c_j) \bmod m] >>> r_j;$$

wherein "$a_j$" and "$c_j$" are two randomly selected integers referred to as "key"; "$r_j$" and "m" are two integers controlling the system but not forming part of the "key"; operator "mod" represents the modulus function; operator ">>>" represents the cyclic shift to the right function; and where the values of the key must verify that 1≤$a_j$≤m and 1≤$c_j$≤m; for all the values of "j" comprised between 1 and "k", both values 1 and "k" included.

The system of the present invention comprises external values referred to as "seed" which serve to both initialize the system and to change the changing the starting point of the sequences generated in any desired moment.

This chaotic map allows generating the same sequences of random numbers repeatedly if the key is maintained. On the other hand, if the key is maintained but the external values referred to as seed are modified, the system generates the same sequences but with different starting points.

Therefore, the system is controlled by the external values referred to as "seed" and by the numbers forming the "key". Furthermore, the maximum length of the sequence of random numbers that the system can generate depends on the number of discrete chaotic maps that are used, as well as on the amount of bits used to code each number. The variations of all the preceding technical features allow the system to adapt to any embodiment needs.

Although the part of the expression for $f_j(x_{n-j})$ in brackets is known in the state of the art, the cyclic shift to the right function ">>>" is an innovation because it introduces a high degree of entropy in the system, which entails a high levels of randomness in the generated data sequence.

The system for generating unpredictable pseudorandom numbers in a chaotic manner of the present invention comprising, for predetermined implementation values comprising at least one word size "S" and a number of discrete chaotic maps "k", at least:

● a chaotic-based unpredictable pseudorandom number generator;
● a parallel load module;
● an output register storing the generated sequence comprised by concatenating the generated numbers; and,

● an input register storing "k" initialization values $y_1$ to $y_k$, said initialization values being referred to as "seed" in the present invention without this representing any limitation thereof whatsoever.

The chaotic-based unpredictable pseudorandom number generator additionally comprises at least:

● "k" processing means MP1 to MPK for processing "k" discrete chaotic maps $f_1(x_{n-1})$ to $f_k(x_{n-k})$, fj($x_{n-j}$) being:

$$f_j(x_{n-j}) = [(a_j x_{n-j} + c_j) \bmod m] >>> r_j$$

where the coefficients "$a_j$" and "$c_j$" are two randomly selected integers referred to as "key" such that $1 \leq a_j \leq m$, $1 \leq c_j \leq m$; "$x_{n-j}$" is the random number generated in the previous moment "n-j"; "$r_j$" and "m" two integers; "mod" the modulus function; "j" an integer such that $1 \leq j \leq k$; operator ">>>" the shift to the right function;
● an XOR logic gate performing the bit-by-bit modulo 2 addition from the result obtained by "k" processing means MP1 to MPK of "k" discrete chaotic maps $f_1(x_{n-1})$ to $f_k(x_{n-k})$, obtaining the unpredictable pseudorandom number "$x_n$":

$$x_n = [f_1(x_{n-1})] \oplus ... \oplus [f_k(x_{n-k})];$$

● a cyclic shift module computing the shift to the right in "$r_j$" bits of the binary number obtained when the discrete chaotic map $f_j(x_{n-j})$ is processed by the processing means "j", "j" being a number such that $1 \leq j \leq k$; said cyclic shift module is located in a location option selected from a location comprised in each of "k" processing means and a location independent of "k" processing means connected to said "k" processing means and to the XOR logic gate;
● "k" memory elements EM1 to EMK storing data selected from the last "k" unpredictable pseudorandom numbers generated by the generator when the system has already been initialized, and "k" initialization values $y_1$ to $y_k$ with word sizes of "S" bits referred to as "seed" coming from the input register when an action selected from initializing the system and changing the starting point is performed;
● "k" commutators CM1 to CMK which allow loading "k" memory elements EM1 to EMK with "k" external values referred to as "seed" $y_1$ to $y_k$;
● an output connector connecting the output of the XOR logic gate with the output register for adding the unpredictable pseudorandom number "$x_n$" generated in moment "n" to the sequence of numbers stored in said output register and made up of the pseudorandom numbers generated in the previous moments; and,
● "k" input connectors for loading "k" initialization values $y_1$ to $y_k$ referred to as "seed" in "k" commutators CM1 to CMK, as well as a load input connector connecting the parallel load module with the control input of "k" commutators CM1 to CMK, and a generated number input connector connecting the output connector with the input of memory element number one EM1.

On the other hand, the innovative method for generating unpredictable pseudorandom numbers in a chaotic manner comprising, for predetermined implementation values comprising at least one word size "S" and a number of discrete chaotic maps "k", said number of discrete chaotic maps being at least 2 in number, at least the following steps:

i) executing an order to load "k" initialization values referred to as "seed" in parallel from a parallel load module, each initialization value comprising a word length of "S" bits;
ii) reading "k" initialization values referred to as "seed" in an input register;
iii) opening "k" commutators;
iv) loading "k" memory elements with "k" initialization values in parallel when an action selected from starting the system and changing the starting point of a generated sequence is required;
v) updating the content of "k" memory elements numbered one to "k" which, for an implementation in which said memory elements are each interconnected with the following element; where the last element with number "k" is not connected to any other element, and where memory element number one receives at its input the unpredictable pseudorandom number generated, by means of the following sub-steps:

o discarding the content of memory element number "k";
o moving the content of each memory element "h" to memory element number "h+1" for values of "h" such that $1 \leq h \leq k$; and,

o loading memory element number "k" with the last value of the unpredictable pseudo-chaotic number generated "$x_n$";

when the system has previously been initialized;

vi) processing "k" discrete chaotic maps $f_k(x_{n-k})$ by means of "k" processing means; "k" chaotic maps being those defined by:

$$f_j(x_{n-j}) = \left[ (a_j x_{n-j} + c_j) \bmod m \right] >>> r_j;$$

wherein "$a_j$" and "$c_j$" are two randomly selected integers referred to as "key"; "$r_j$" and "$m$" are two integers; operator "mod" represents the modulus function; operator ">>>" represents the cyclic shift to the right function; and where the values of the key must verify that $1 \le a_j \le m$ and $1 \le c_j \le m$; for all the values of "j" comprised between 1 and "k", both included;

vii) computing the bit-by-bit modulo 2 addition, XOR, of the result of processing "k" chaotic maps, generating a new unpredictable pseudorandom number "$x_n$":

$$x_n = \left[ f_1(x_{n-1}) \right] \oplus \cdots \oplus \left[ f_k(x_{n-k}) \right];$$

viii) adding the generated unpredictable pseudorandom number "$x_n$" to the sequence generated and stored in the output register.

Where steps i) to iv) described above are furthermore only performed once to carry out an action selected from initializing the system and changing the starting point of the generated sequence, and where steps v) to viii) are loop executed until the generated sequence contains the amount of unpredictable pseudorandom numbers established by a predetermined number.

Brief Description of the Drawings

Figure 1 shows a block diagram of the system for generating unpredictable pseudorandom numbers according to the present invention in the most generic implementation form.
Figure 2 shows a flow chart of the method for generating unpredictable pseudorandom numbers according to the present invention in the most generic implementation form.
Figure 3 shows a block diagram of the system for generating unpredictable pseudorandom numbers according to the present invention for an implementation with two discrete chaotic maps and a word size of 64 bits.
Figure 4 shows a flow chart of the method for generating unpredictable pseudorandom numbers according to the present invention for an implementation with two discrete chaotic maps and a word size of 64 bits.
Figure 5 shows a block diagram of the system for generating unpredictable pseudorandom numbers according to the present invention for an implementation with six discrete chaotic maps and a word size of 32 bits.
Figure 6 shows a flow chart of the method for generating unpredictable pseudorandom numbers according to the present invention for an implementation with six discrete chaotic maps and a word size of 32 bits.
Figure 7 shows an implementation example of the present invention applied to a stream cipher device.
Figure 8 shows an implementation example of the present invention applied to a Message Authentication Code (MAC) generator device.

Description of several Embodiments of the Invention

Several embodiments of the invention are described below with an illustrative and non-limiting character using the reference numbers used in the drawings.

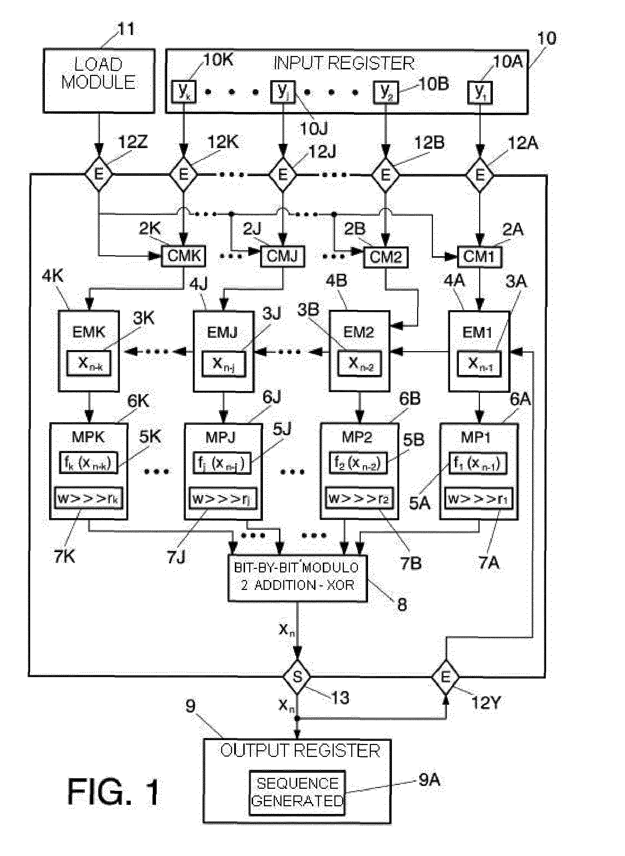

Figure 1 shows a block diagram of the system for generating unpredictable pseudorandom numbers according to the present invention. To determine the configuration or implementation of the system, it is necessary to at least predetermine the word size "S" and the number of discrete chaotic maps "k". In the broadest embodiment shown in Figure 1, the system comprises at least the following elements:

● a chaotic-based unpredictable pseudorandom number generator (1);
● a parallel load module (11);
● an output register (9) storing the generated sequence (9A) comprised by concatenating the generated numbers "$x_n$"; and,
● an input register (10) storing "k" initialization values $y_1$ (10A), $y_2$ (10B), ..., $y_j$ (10J), ..., $y_k$ (10k), said initialization values being referred to as "seed" in the present invention.

The chaotic-based unpredictable pseudorandom number generator (1) additionally comprises at least:

● "k" processing means MP1 (6A), MP2 (6B), ..., MPJ (6J), ..., MPK (6K) for processing "k" discrete chaotic maps $f_1(x_{n-1})$ (5A), $f_2(x_{n-2})$ (5B), ..., $f_j(x_{n-j})$ (5J), ..., fk($x_{n-k}$)(5K), $f_j(x_{n-j})$ being:

$$f_j(x_{n-j}) = \left[(a_j x_{n-j} + c_j) \bmod m\right] >>> r_j$$

the coefficients "$a_j$" and "$c_j$" being two randomly selected integers referred to as "key" such that $1 \leq a_j \leq m$, $1 \leq c_j \leq m$; $x_{n-j}$ is the random number generated in the previous moment "n-j"; "$r_j$" and "m" two integers; "mod" the modulus function; "j" an integer such that $1 \leq j \leq k$; operator ">>>" the shift to the right function which is carried out by "k" cyclic shift modules (7A,7B,...,7J,...,7K) computing the shift to the right in "$r_j$" bits of the binary number obtained when the discrete chaotic map $f_j(x_{n-j})$ is processed by the processing means "j"; said "k" cyclic shift modules (7A,7B,...,7J,..., 7K) are located in a location option selected from a location comprised in each of "k" processing means and a location independent of "k" processing means connected to said "k" processing means and to the XOR logic gate(8);
● an XOR logic gate (8) performing the bit-by-bit modulo 2 addition from the result obtained by "k" processing means MP1 (6A), MP2 (6B), ..., MPJ (6J), ..., MPK (6K) for processing "k" discrete chaotic maps $f_1(x_{n-1})$ (5A), $f_2(x_{n-2})$ (5B), ..., $f_j(x_{n-j})$ (5J), ..., $f_k(x_{n-k})$ (5K), obtaining the unpredictable pseudorandom number $x_n$:

$$x_n = [f_1(x_{n-1})] \oplus [f_2(x_{n-2})] \oplus ... \oplus [f_j(x_{n-j})] \oplus ... \oplus [f_k(x_{n-k})];$$

● "k" memory elements, EM1 (4A), EM2 (4B), ..., EMJ (4J), ..., EMK (4K) storing data selected from the last "k" unpredictable pseudorandom numbers generated by the generator when the system has already been initialized, and "k" initialization values $y_1$ (10A), $y_2$ (10B), ..., $y_j$ (10J), ..., $y_k$ (10k) with word sizes of "S" bits referred to as "seed" coming from the input register (10) when an action selected from initializing the system and changing the starting point is performed;
● "k" commutators CM1 (2A), CM2 (2B), ..., CMJ (2J), ..., CMK (2K) which allow loading "k" memory elements EM1 (4A), EM2 (4B), ..., EMJ (4J), ..., EMK (4K) with "k" external values referred to as "seed" $y_1$ (10A), $y_2$ (10B), ..., $y_j$ (10J), ..., $y_k$ (10K);
● an output connector (13) connecting the output of the XOR logic gate (8) with the output register (9) for adding the unpredictable pseudorandom number "$x_n$" generated in moment "n" to the sequence of numbers (9A) stored in said output register (9) and made up of the pseudorandom numbers generated in the previous moments; and,
● "k" input connectors (12A, 12B, ..., 12J, ..., 12K) for loading "k" initialization values $y_1$ (10A), $y_2$ (10B), ..., $y_j$ (10J), ..., $y_k$ (10K) referred to as "seed" in "k" commutators CM1(2A), CM2(2B), ..., CMJ(2J), ..., CMK(2K), as well as a load input connector (12Z) connecting the parallel load module (11) with the control input of "k" commutators CM1(2A), CM2(2B), ..., CMJ(2J), ..., CMK(2K), and a generated number input connector (12Y) connecting the output connector (13) with the input of memory element EM1 (4A).

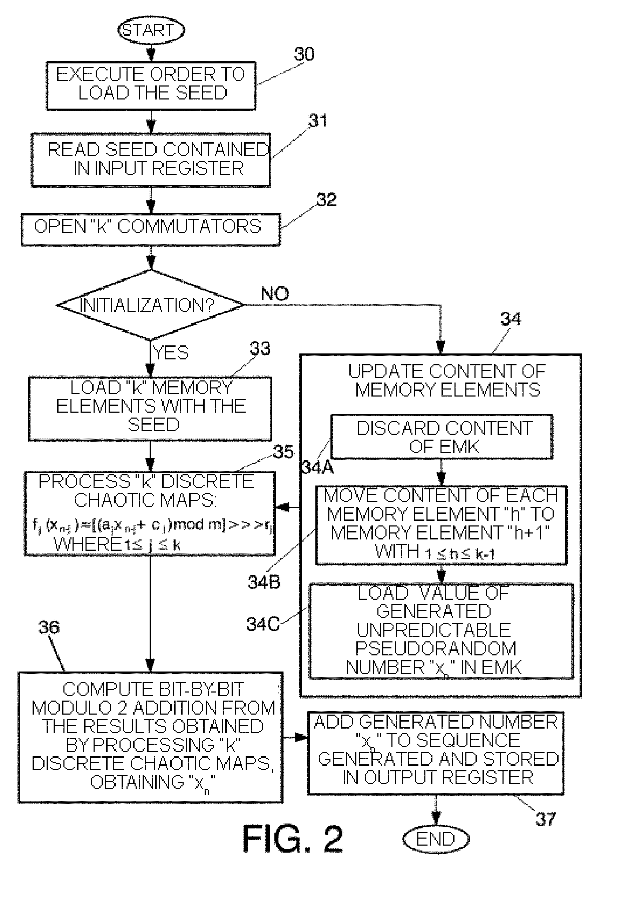

Figure 2 shows a flow chart of the method for generating unpredictable pseudorandom numbers according to the present invention. Said flow chart depicts the method of the present invention for an implementation of the system shown in Figure 1. Said method comprises at least the following steps:

i) executing (30) an order to load "k" initialization values referred to as "seed" in parallel from a parallel load module, each initialization value comprising a word length of "S" bits;
ii) reading (31) "k" initialization values referred to as "seed" in an input register;
iii) opening (32) "k" commutators;
iv) loading (33) "k" memory elements with "k" initialization values in parallel when an action selected from starting the system and changing the starting point of a generated sequence is required;

v) updating (34) the content of "k" memory elements numbered one to "k" which, for an implementation in which said memory elements are each interconnected with the following element; where the last element with number "k" is not connected to any other element, and where memory element number one receives at its input the unpredictable pseudorandom number generated by means of the following sub-steps:

    o discarding (34A) the content of memory element number "k";

    o moving (34B) the content of each memory element "h" to memory element number "h+1", "h" being an integer such that $1 \leq h < k$; and,

    o loading (34C) memory element number one EM1 with the last value of the unpredictable pseudo-chaotic number generated "$x_n$";

when the system has previously been initialized;

vi) processing (35) "k" discrete chaotic maps $f_k(x_{n-k})$ by means of "k" processing means; "k" chaotic maps being those defined by:

$$f_k(x_{n-k}) = [(a_k x_{n-k} + c_k) \bmod m] >>> r_k;$$

each pair of coefficients "$a_k$" and "$c_k$" being two randomly selected integers referred to as "key" such that $1 \leq a_k \leq m$, $1 \leq c_k \leq m$; $x_{n-k}$ is the random number generated in the previous moment "n-k"; "$r_k$" and "m" two integers; "mod" the modulus function; operator ">>>" the shift to the right function;

vii) computing (36) the bit-by-bit modulo 2 addition, XOR, of the result of processing "k" chaotic maps, generating a new unpredictable pseudorandom number "$x_n$":

$$x_n = [f_1(x_{n-1})] \oplus \dots \oplus [f_k(x_{n-k})];$$

viii) adding (37) the generated unpredictable pseudorandom number "$x_n$" to the sequence generated and stored in the output register;

where steps i) to iv) described above are furthermore only performed once to carry out an action selected from initializing the system and changing the starting point of the generated sequence, and where steps v) to viii) are loop executed until the generated sequence contains the amount of unpredictable pseudorandom numbers established by a predetermined number. Said predetermined number must be less than the period P of the generator to maintain system strength.

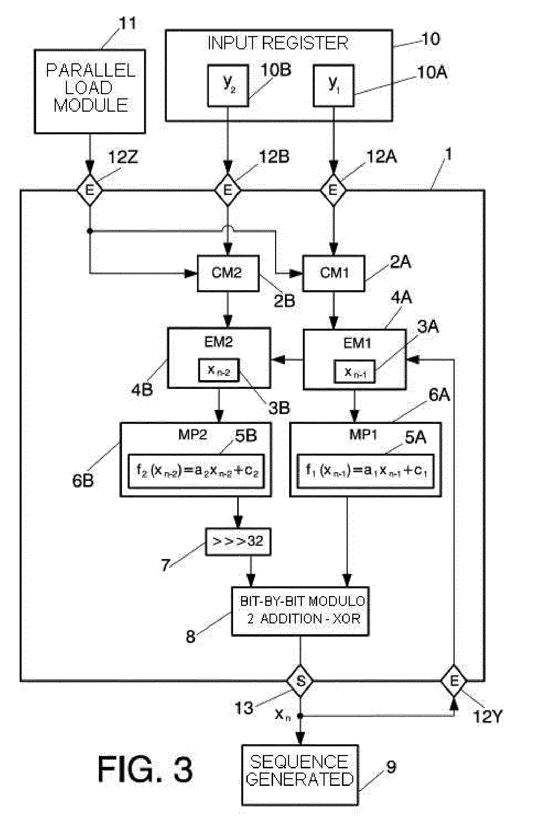

Figure 3 shows a block diagram of the system for generating unpredictable pseudorandom numbers according to the present invention. To determine the configuration of the system, it is only necessary to determine the word size and a number of discrete chaotic maps. The diagram shown in Figure 3 corresponds to an implementation where the word size is 64 bits, S=64, with a number of chaotic maps equal to 2, k=2. This design is quick to be implemented and entails low resource consumption for generating the pseudorandom numbers. The maximum period of generator P with said configuration is $2^{(S \cdot k)}$, i.e., $P = 2^{128} \approx 3.4 \ 10^{38}$. As the condition for the generated sequence M is that it must be less than period P, this implementation of the generator is suitable for a sequence size of up to $10^{30}$ numbers.

The system according to the implementation shown in Figure 3 comprises a chaotic-based unpredictable pseudorandom number generator (1), a parallel load module (11), an output register (9) storing the generated sequence comprised by concatenating the generated numbers, and an input register (10) storing initialization values $y_1$ (10A) and $y_2$ (10B), said initialization values being referred to as "seed" in the present invention.

The unpredictable pseudorandom number generator (1) shown in Figure 3 additionally comprises the following elements:

    ● two processing means MP1 (6A) and MP2 (6B) for processing two discrete chaotic maps $f_1(x_{n-1})$ (5A) and $f_2(x_{n-2})$ (5B);

    ● an XOR logic gate (8) performing the bit-by-bit modulo 2 addition from the result obtained by the two processing means MP1 (6A) and MP2 (6B) for processing the two discrete chaotic maps $f_1(x_{n-1})$ (5A) and $f_2(x_{n-2})$ (5B);

    ● a cyclic shift module (7) computing the 32 bit shift to the right of the binary number it has at its input, i.e., the number obtained from processing the discrete chaotic map $f_2(x_{n-2})$ by the processing means MP2; said cyclic shift module (7) is located in a location option selected from a location comprised in the processing means MP2 and a location independent of said module;

● two memory elements, EM1 (4A) and EM2 (4B) storing the unpredictable pseudorandom numbers generated by the generator in the two previous moments "n-1" and "n-2" when the system has already been initialized, or the two initialization values $y_1$ (10A) and $y_2$ (10B) with word sizes of 64 bits referred to as "seed" coming from the output register (10) when the system is initialized or the starting point is changed;

● two commutators CM1 (2A) and CM2 (2B) which allow loading the two memory elements EM1 (4A) and EM2 (4B) with the two external values referred to as "seed" $y_1$ (10A) and $y_2$ (10B);

● a first input connector (12A) and a second input connector (12B) for loading the external values referred to as "seed" $y_1$ (10A) and $y_2$ (10B) in two commutators CM1 (2A) and CM2 (2B), as well as a load input connector (12Z) connecting the parallel load module (11) with the control input of two commutators CM1 (2A) and CM2 (2B);

● an output connector (13) connecting the output of the XOR logic gate (8) with the output register (9) for adding the unpredictable pseudorandom number "$x_n$" generated in moment "n" to the sequence of numbers stored in said output register (9) and made up of the pseudorandom numbers generated in the previous moments.

The generator additionally comprises a generated number input connector (12Y) connecting the output connector (13) with the input of memory element EM1 (4A) storing the unpredictable pseudorandom number in moment "n-1" so that said element can be updated with the unpredictable pseudorandom number "$x_n$". In the same manner, memory elements EM1 (4A) and EM2 (4B) are interconnected to update their content when a new unpredictable pseudorandom number is generated. Therefore, the content of the memory element EM2 (4B) storing the unpredictable pseudorandom number in moment "n-2" is replaced with the content of memory element EM1 (4A) storing the unpredictable pseudorandom number in moment "n-1", and this is replaced with the unpredictable pseudorandom number generated in moment "n".

The two chaotic map processing means MP1 (6A) and MP2 (6B) compute the two functions $f_1(x_{n-1})$ (5A) and $f_2(x_{n-2})$ (5B) defining the discrete chaotic maps, said functions being:

$$\mathbf{f_1(x_{n-1})} = [(a_1 x_{n-1} + c_1) \bmod 2^{64}];$$

$$\mathbf{f_2(x_{n-2})} = [(a_2 x_{n-2} + c_2) \bmod 2^{64}];$$

coefficients "$a_1$", "$a_2$", "$c_1$" and "$c_2$" being four randomly selected integers referred to as "key"; $x_{n-1}$ and $x_{n-2}$ are the unpredictable pseudorandom numbers generated in the previous moments "n-1" and "n-2", respectively.

Therefore, the unpredictable pseudorandom number "$x_n$" obtained in moment "n" is:

$$\mathbf{x_n} = [[(a_1 x_{n-1} + c_1) \bmod 2^{64}] \oplus [[(a_2 x_{n-2} + c_2) \bmod 2^{64}] >>> 32]];$$

where "mod" is the modulus function, operator ">>>" the cyclic shift to the right function and where it is further found that $1 \le a_j \le m$ and $1 \le c_j \le m$.

The implementation (not shown) of the cyclic shift module (7) in a unit external to both the processing means and to the unpredictable pseudorandom number generator (1) allows adding an additional degree of security to the system of the present invention because said cyclic shift module (7) is what generates entropy of the system.

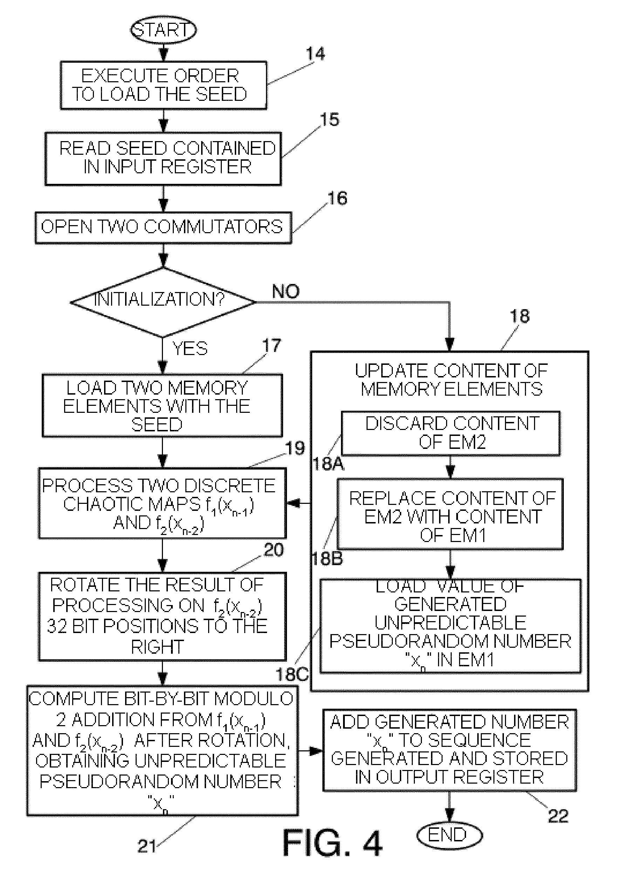

Figure 4 shows a flow chart of the method for generating unpredictable pseudorandom numbers according to the present invention. Said flow chart depicts the method of the present invention for an implementation of the system shown in Figure 3, i.e., for a system determined by a word size of 64 bits and two discrete chaotic maps. Said method shown in Figure 4 with which unpredictable pseudorandom numbers are obtained in a chaotic manner comprises the following steps:

i) executing (14) the order to load initialization values referred to as "seed" in parallel from the parallel load module;

ii) reading (15) initialization values $y_1$ and $y_2$ referred to as "seed" in the input register, each value $y_1$ and $y_2$ comprising a word length of 64 bits;

iii) opening (16) commutators CM1 and CM2;

iv) loading (17) memory elements EM1 and EM2 with initialization values $y_1$ and $y_2$ in parallel if the system is initialized or if changing the starting point of the generated sequence is required;

v) updating (18) the content of memory elements EM1 and EM2: discarding (18A) the content of memory element EM2 containing the unpredictable pseudorandom number generated in moment "n-2"; replacing (18B) the content of EM2 with the content of memory element EM1; and loading (18C) memory element EM1 with the last value of the unpredictable pseudo-chaotic number generated "$x_n$";
when the system is not initialized;
vi) processing (19) the two discrete chaotic maps $f_1(x_{n-1})$ and $f_2(x_{n-2})$ by means of the two processing means MP1 and MP2; the two chaotic maps being those defined by:

$$f_1(x_{n-1}) = [(a_1 x_{n-1} + c_1) \bmod 2^{64}];$$

$$f_2(x_{n-2}) = [(a_2 x_{n-2} + c_2) \bmod 2^{64}];$$

vii) rotating (20) the result obtained from processing chaotic map $f_2(x_{n-2})$ 32 bit positions to the right;
viii) computing (21) the bit-by-bit modulo 2 addition, XOR, from the result obtained in the two preceding steps, i.e., the result of processing two chaotic maps $f_1(x_{n-1})$ and $f_2(x_{n-2})$ with the subsequent rotation of $f_2(x_{n-2})$, generating a new unpredictable pseudorandom number "$x_n$";
ix) adding (22) the generated unpredictable pseudorandom number "$x_n$" to the sequence generated and stored in the output register.

Steps i) to iv) described above are only performed once for initializing the system or for changing the starting point. In contrast, steps v) to ix) are loop executed until the generated sequence contains the amount of unpredictable pseudorandom numbers established by a predetermined number. Said predetermined number must be less than the period P of the generator.

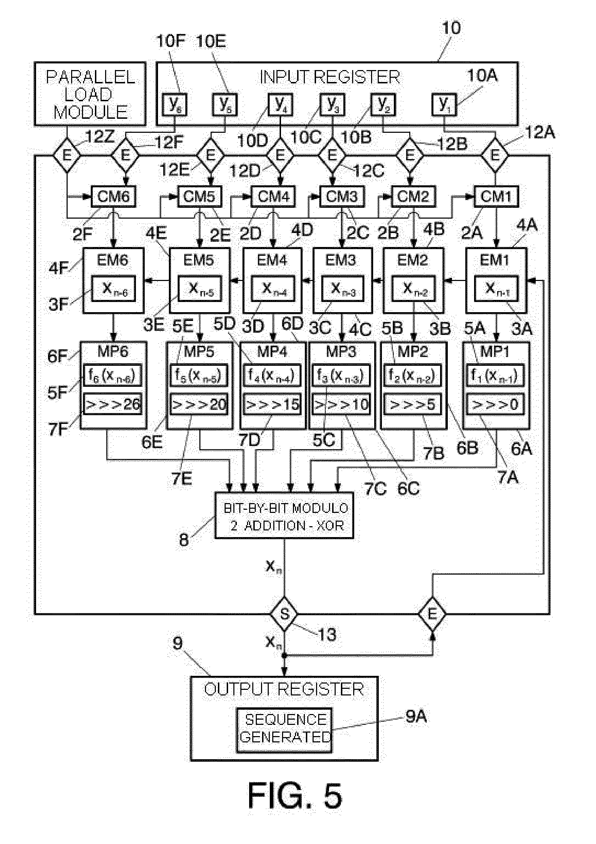

Figure 5 shows a block diagram of the system for generating unpredictable pseudorandom numbers according to the present invention. The diagram shown in Figure 5 corresponds to an implementation where the word size is 32 bits, S=32, with a number of chaotic maps equal to 6, k=6. The maximum period of the generator P with said configuration is $2^{(S \cdot k)}$, i.e., P= $2^{192} \approx 10^{59}$. As the condition for the generated sequence M is that it must be much less than period P, this implementation of the generator is suitable for a sequence size of up to $10^{50}$ numbers.

The system according to the implementation shown in Figure 5 comprises a chaotic-based unpredictable pseudorandom number generator (1), a parallel load module (11), an output register (9) storing the generated sequence comprised by concatenating the generated numbers, and an input register (10) storing initialization values $y_1$ (10A), $y_2$ (10B), $y_3$ (10C), $y_4$ (10D), $y_5$ (10E) and $y_6$ (10F), said initialization values being referred to as "seed" in the present invention.

The unpredictable pseudorandom number generator (1) shown in Figure 5 additionally comprises the following elements:

● six processing means MP1 (6A), MP2 (6B), MP3 (6C), MP4 (6D), MP5 (6E) and MP6 (6F) for processing six discrete chaotic maps $f_1(x_{n-1})$ (5A), $f_2(x_{n-2})$ (5B), $f_3(x_{n-3})$ (5C), $f_4(x_{n-4})$ (5D), $f_5(x_{n-5})$ (5E) and $f_6(x_{n-6})$ (5F) comprising respective shift modules (7A-7F) performing a 0, 5, 10, 15, 20 and 26 bit position shift to the right, respectively, of the results obtained by the six processing means;
● an XOR logic gate (8) performing the bit-by-bit modulo 2 addition from the result obtained by the six processing means MP1 (6A), MP2 (6B), MP3 (6C), MP4(6D), MP5 (6E) and MP6 (6F) for processing six discrete chaotic maps $f_1(x_{n-1})$ (5A), $f_2(x_{n-2})$ (5B), $f_3(x_{n-3})$ (5C), $f_4(x_{n-4})$ (5D), $f_5(x_{n-5})$ (5E) and $f_6(x_{n-6})$ (5F);
● six memory elements EM1 (4A), EM2 (4B), EM3 (4C), EM4 (4D), EM5 (4E) and EM6 (4F) storing the unpredictable pseudorandom numbers generated by the generator in the six previous moments "n-1 ", "n-2", "n-3", "n-4", "n-5" and "n-6" when the system has already been initialized, or six initialization values $y_1$ (10A), $y_2$ (10B), $y_3$ (10C), $y_4$ (10D), $y_5$ (10E) and $y_6$ (10F) with word sizes of 32 bits referred to as "seed" coming from the output register (10) when the system is initialized or the starting point is changed;
● six commutators CM1 (2A), CM2 (2B), CM3 (2C), CM4 (2D), CM5 (2E) and CM6 (2F) which allow loading the six memory elements EM1 (4A), EM2 (4B), EM3 (4C), EM4 (4D), EM5 (4E) and EM6 (4F) with the six external values referred to as "seed" $y_1$ (10A), $y_2$ (10B), $y_3$ (10C), $y_4$ (10D), $y_5$ (10E) and $y_6$ (10F);
● a first input connector (12A), a second input connector (12B), a third input connector (12C), a fourth input connector (12D), a fifth input connector (12E) and a sixth input connector (12F) for loading external values referred to as "seed" $y_1$ (10A), $y_2$ (10B), $y_3$ (10C), $y_4$ (10D), $y_5$ (10E) and $y_6$ (10F) in six commutators CM1 (2A), CM2 (2B), CM3 (2C), CM4 (2D), CM5 (2E) and CM6 (2F), as well as a load input connector (12Z) connecting the parallel load module (11) with the control input of the six commutators CM1 (2A), CM2 (2B), CM3 (2C), CM4 (2D), CM5 (2E) and CM6 (2F);
● an output connector (13) connecting the output of the XOR logic gate (8) with the output register (9) for adding the unpredictable pseudorandom number "$x_n$" generated in moment "n" to the sequence of numbers stored in said output register (9) and made up of the pseudorandom numbers generated in the previous moments.

The generator additionally comprises a generated number input connector (12Y) connecting the output connector (13) with the input of memory element EM1 (4A) storing the unpredictable pseudorandom number in moment "n-1" so that said element can be updated with the unpredictable pseudorandom number "$x_n$". In the same manner, memory elements EM1 (4A), EM2 (4B), EM3 (4C), EM4 (4D), EM5 (4E) and EM6 (4F) are interconnected to update their content when a new unpredictable pseudorandom number is generated, such that the content of each memory element is shifted to the memory element located immediately to its left, i.e., memory elements EM1 (4A), EM2 (4B), EM3 (4C), EM4 (4D) and EM5 (4E) send their respective contents to memory elements EM2 (4B), EM3 (4C), EM4 (4D), EM5 (4E) and EM6 (4F), respectively, where memory element EM1 (4A) further stores the new number generated after sending its content to memory element EM2 (4B) and where memory element EM6 (4F) discards its content before receiving the content of memory element EM5 (4E).

The six chaotic map processing means EM1 (4A), EM2 (4B), EM3 (4C), EM4 (4D), EM5 (4E) and EM6 (4F) compute the six functions $f_1(x_{n-1})$ (5A), $f_2(x_{n-2})$(5B), $f_3(x_{n-3})$ (5C), $f_4(x_{n-4})$ (5D), $f_5(x_{n-5})$ (5E) and $f_6(x_{n-6})$ (5F) defining the discrete chaotic maps, said functions being:

$$f_1(x_{n-1}) = [(a_1 x_{n-1} + c_1) \bmod 2^{32}] >>> 0;$$

$$f_2(x_{n-2}) = [(a_2 x_{n-2} + c_2) \bmod 2^{32}] >>> 5;$$

$$f_3(x_{n-3}) = [(a_3 x_{n-3} + c_3) \bmod 2^{32}] >>> 10;$$

$$f_4(x_{n-4}) = [(a_4 x_{n-4} + c_4) \bmod 2^{32}] >>> 15;$$

$$f_5(x_{n-5}) = [(a_5 x_{n-5} + c_5) \bmod 2^{32}] >>> 20;$$

$$f_6(x_{n-6}) = [(a_6 x_{n-6} + c_6) \bmod 2^{32}] >>> 25;$$

the coefficients "$a_1$", "$a_2$", "$a_3$", "$a_4$", "$a_5$", "$a_6$", "$c_1$", "$c_2$", "$c_3$", "$c_4$", "$c_5$" and "$c_6$" being twelve randomly selected integers referred to as "key"; $x_{n-1}$, $x_{n-2}$, $x_{n-3}$, $x_{n-4}$, $x_{n-5}$ and $x_{n-6}$ being the unpredictable pseudorandom numbers generated in previous moments "n-1", "n-2", "n-3", "n-4", "n-5" and "n-6", respectively, where "mod" is the modulus function, the operator "$>>> r_j$" is the cyclic shift "$r_j$" bit positions to the right function and where it is further found that $1 \le a_j \le m$ and $1 \le c_j \le m$. In this implementation, each processing means comprise its own shift module for performing the shift function.

Therefore, the unpredictable pseudorandom number "$x_n$" obtained in moment "n" is:

$$x_n = [[f_1(x_{n-1})] \oplus [f_2(x_{n-2})] \oplus [f_3(x_{n-3})] \oplus [f_4(x_{n-4})] \oplus [f_5(x_{n-5})] \oplus [f_6(x_{n-6})]];$$

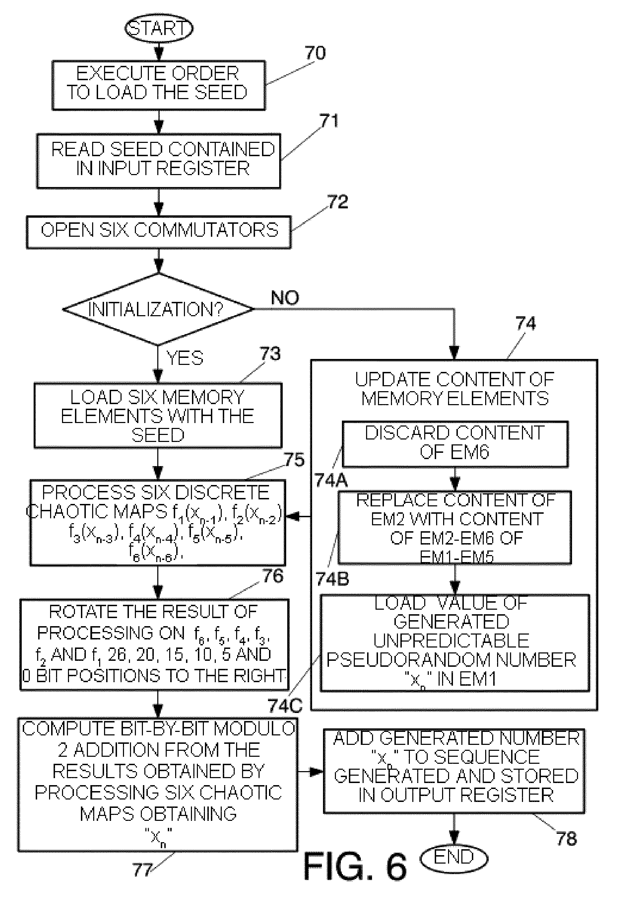

Figure 6 shows a flow chart of the method for generating unpredictable pseudorandom numbers according to the present invention. Said flow chart depicts the method of the present invention for an implementation of the system shown in Figure 5, i.e., for a system determined by a word size of 32 bits and six discrete chaotic maps. Said method shown in Figure 6 with which the unpredictable pseudorandom numbers are obtained in a chaotic manner comprises the following steps:

i) executing (70) the order to load the initialization values referred to as "seed" in parallel from the parallel load module;

ii) reading (71) initialization values $y_1$, $y_2$, $y_3$, $y_4$, $y_5$ and $y_6$ referred to as "seed" in the input register, each value $y_1$, $y_2$, $y_3$, $y_4$, $y_5$ and $y_6$ comprising a word length of 32 bits;

iii) opening (72) commutators CM1, CM2, CM3, CM4, CM5 and CM6;

iv) loading (73) memory elements EM1, EM2, EM3, EM4, EM5 and EM6 with initialization values $y_1$, $y_2$, $y_3$, $y_4$, $y_5$ and $y_6$ in parallel if the system is initialized or if changing the starting point of the generated sequence is required;

v) updating (74) the content of memory elements EM1, EM2, EM3, EM4, EM5 and EM6: discarding (74A) the content of memory element EM6 containing the unpredictable pseudorandom number generated in moment "n-6", replacing (74B) the content of EM2-EM6 with the content of memory element EM1-EM5, and loading (74C) memory element EM1 with the last value of the unpredictable pseudo-chaotic number generated "$x_n$" when the system is not initialized;

vi) processing (75) six discrete chaotic maps $f_1(x_{n-1})$, $f_2(x_{n-2})$, $f_3(x_{n-3})$, $f_4(x_{n-4})$, $f_5(x_{n-5})$ and $f_6(x_{n-6})$ by means of six processing means MP1, MP2, MP3, MP4, MP5 and MP6;

vii) rotating (76) the result obtained from processing chaotic maps $f_1(x_{n-1})$, $f_2(x_{n-2})$, $f_3(x_{n-3})$, $f_4(x_{n-4})$, $f_5(x_{n-5})$ and $f_6(x_{n-6})$ 0, 5, 10, 15, 20 and 26 bit positions to the right;

viii) computing (77) the bit-by-bit modulo 2 addition, XOR, from the result obtained in the two preceding steps, generating a new unpredictable pseudorandom number "$x_n$";

ix) adding (78) the generated unpredictable pseudorandom number "$x_n$" to the sequence generated and stored in the output register.

Steps i) to iv) described above are only performed once for initializing the system or for changing the starting point. In contrast, steps v) to ix) are loop executed until the generated sequence contains the amount of unpredictable pseudorandom numbers established by a predetermined number. Said predetermined number must be less than the period P of the generator.

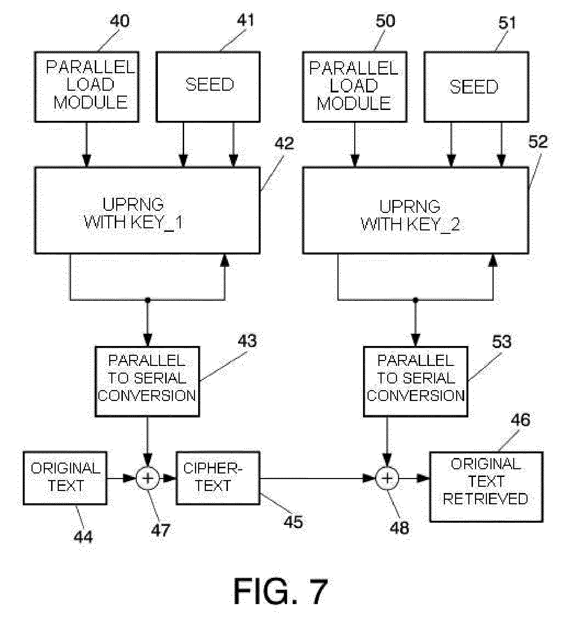

Figure 7 shows an implementation example of the present invention applied to a stream cipher device comprising in transmission at least one parallel load module (40), an input register with seed_1 (41), an unpredictable pseudorandom number generator, UPRNG, (42) and a parallel to serial converter (43) which obtains a ciphertext (45) of the original text (44) when applied (47) to said original text (44). However at reception, the implementation comprises at least one parallel load module (50), an input register with seed_1 (51), an unpredictable pseudorandom number generator, UPRNG, (52) and a parallel to serial converter (53) which returns the retrieved original text (46) when applied (48) to the ciphertext (45).

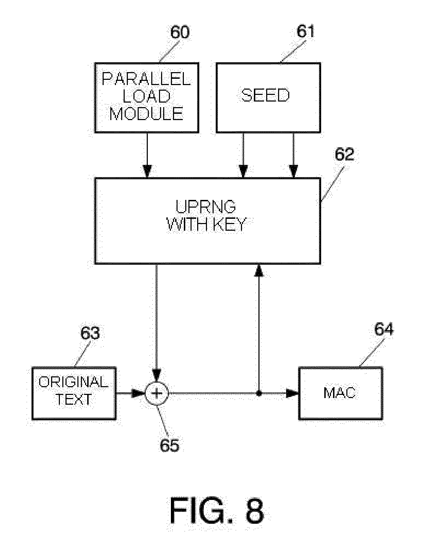

Figure 8 shows an implementation example of the present invention applied to a Message Authentication Code (MAC) generator device. Said device comprises at least one parallel load module (60), an input register with the seed (61) and an unpredictable pseudorandom number generator, UPRNG, (62) which returns a message authentication code (64) when applied (65) to the original text (44).

## Claims

1. A method for generating unpredictable pseudorandom numbers in a chaotic manner, **characterized in that** for predetermined implementation values comprising at least one word size "S" and a number of discrete chaotic maps "k", said number of discrete chaotic maps being at least 2 in number, said method comprises at least the following steps:

    i) executing (14) an order to load "k" initialization values referred to as "seed" in parallel from a parallel load module, each initialization value comprising a word length of "S" bits;

    ii) reading (15) "k" initialization values referred to as "seed" in an input register;

    iii) opening (16) "k" commutators;

    iv) loading (17) "k" memory elements with "k" initialization values in parallel when an action selected from starting the system and changing the starting point of a generated sequence is required;

    v) updating (18) the content of "k" memory elements numbered one to "k" which, for an implementation in which said memory elements are each interconnected with the following element; where the last element with number "k" is not connected to any other element, and where memory element number one receives at its input the unpredictable pseudorandom number generated by means of the following sub-steps:

        o discarding (18A) the content of memory element number "k";
        o moving (18B) the content of each memory element "h" to memory element number "h+1" for values of "h" such that $1 \leq h < k$; and,
        o loading (18C) memory element number "k" with the last value of the unpredictable pseudo-chaotic number

generated "$x_n$";

when the system has previously been initialized;

vi) processing (19) "k" discrete chaotic maps $f_k(x_{n-k})$ by means of "k" processing means; "k" chaotic maps being those defined by:

$$f_j(x_{n-j}) = \left[(a_j x_{n-j} + c_j) \bmod m\right] \ggg r_j;$$

wherein "$a_j$" and "$c_j$" are two randomly selected integers referred to as "key"; "$r_j$" and "m" are two integers; operator "mod" represents the modulus function; operator "$\ggg$" represents the cyclic shift to the right function; and where the values of the key must verify that $1 \leq a_j \leq m$ and $1 \leq c_j \leq m$; for all the values of "j" comprised between 1 and "k", both included;

vii) computing (21) the bit-by-bit modulo 2 addition, XOR, of the result of processing "k" chaotic maps, generating a new unpredictable pseudorandom number "$x_n$":

$$x_n = [f_1(x_{n-1})] \oplus \ldots \oplus [f_k(x_{n-k})];$$

viii) adding (22) the generated unpredictable pseudorandom number "$x_n$" to the sequence generated and stored in the output register;

where steps i) to iv) described above are furthermore only performed once to carry out an action selected from initializing the system and changing the starting point of the generated sequence, and where steps v) to viii) are loop executed until the generated sequence contains the amount of unpredictable pseudorandom numbers established by a predetermined number.

2.  A system for generating unpredictable pseudorandom numbers in a chaotic manner, **characterized in that** for predetermined implementation values comprising at least one word size "S" and a number of discrete chaotic maps "k", it comprises at least:

   ● a chaotic-based unpredictable pseudorandom number generator (1);
   ● a parallel load module (11);
   ● an output register (9) storing the generated sequence comprised by concatenating the generated numbers; and,
   ● an input register (10) storing "k" initialization values $y_1$ (10A) to $y_k$ (10k), said initialization values being referred to as "seed".

3.  The system for generating unpredictable pseudorandom numbers in a chaotic manner according to claim 2, **characterized in that** the chaotic-based unpredictable pseudorandom number generator (1) additionally comprises at least:

   ● "k" processing means MP1 (6A) to MPK (6K) for processing "k" discrete chaotic maps $f_1(x_{n-1})$ (5A) to $f_k(x_{n-k})$ (5K), $f_j(x_{n-j})$ being:

$$f_j(x_{n-j}) = \left[(a_j x_{n-j} + c_j) \bmod m\right] \ggg r_j$$

   where the coefficients "$a_j$" and "$c_j$" are two randomly selected integers referred to as "key" such that $1 \leq a_j \leq m$, $1 \leq c_j \leq m$; $x_{n-j}$ is the random number generated in the previous moment "n-j"; "$r_j$" and "m" two integers; "mod" the modulus function; "j" an integer such that $1 \leq j \leq k$; operator "$\ggg$" the shift to the right function;
   ● an XOR logic gate (8) performing the bit-by-bit modulo 2 addition from the result obtained by "k" processing means MP1 (6A) to MPK (6K) for processing "k" discrete chaotic maps $f_1(x_{n-1})$ (5A) to $f_k(x_{n-k})$ (5K), obtaining the unpredictable pseudorandom number $x_n$:

$$x_n = [f_1(x_{n-1})] \oplus \dots \oplus [f_k(x_{n-k})];$$

● a cyclic shift module (7) computing the shift to the right in "$r_j$" bits of the binary number obtained when the discrete chaotic map $f_j(x_{n-j})$ is processed by the processing means "j", "j" being a number such that $1 \le j \le k$; said cyclic shift module (7) is located in a location option selected from a location comprised in each of "k" processing means and a location independent of said cyclic shift module (7) connected to "k" processing means and to the XOR logic gate(8);

● "k" memory elements, EM1 (4A) to EMK (4K) storing data selected from the last "k" unpredictable pseudorandom numbers generated by the generator when the system has already been initialized, and "k" initialization values $y_1$ (10A) to $y_k$ (10K) with word sizes of "S" bits referred to as "seed" coming from the input register (10) when an action selected from initializing the system and changing the starting point is performed;

● "k" commutators CM1(2A) to CMK(2K) which allow loading "k" memory elements EM1 (4A) to EMK(4K) with "k" external values referred to as "seed" $y_1$ (10A) to $y_k$ (10K);

● an output connector (13) connecting the output of the XOR logic gate (8) with the output register (9) for adding the unpredictable pseudorandom number "$x_n$" generated in moment "n" to the sequence of numbers stored in said output register (9) and made up of the pseudorandom numbers generated in the previous moments; and,

● "k" input connectors (12A-12K) for loading "k" initialization values $y_1$ (10A) to $y_k$ (10K) referred to as "seed" in "k" commutators CM1(2A) to CMK(2K), as well as a load input connector (12Z) connecting the parallel load module (11) with the control input of "k" commutators CM1(2A) to CMK (2K), and a generated number input connector (12Y) connecting the output connector (13) with the input of memory element number one EM1.

FIG. 1

START

EXECUTE ORDER TO
LOAD THE SEED — 30

READ SEED CONTAINED
IN INPUT REGISTER — 31

OPEN "k" COMMUTATORS — 32

INITIALIZATION? — NO

YES — 33

LOAD "k" MEMORY
ELEMENTS WITH THE
SEED

PROCESS "k" DISCRETE
CHAOTIC MAPS: — 35

$f_j(x_{n-j}) = [(a_j x_{n-j} + c_j) \bmod m] >>> r_j$
WHERE $1 \leq j \leq k$

34

UPDATE CONTENT OF
MEMORY ELEMENTS

DISCARD CONTENT
OF EMK — 34A

MOVE CONTENT OF EACH
MEMORY ELEMENT "h" TO
MEMORY ELEMENT "h+1"
WITH $1 \leq h \leq k-1$ — 34B

LOAD VALUE OF
GENERATED
UNPREDICTABLE
PSEUDORANDOM
NUMBER "$x_n$" IN EMK — 34C

COMPUTE BIT-BY-BIT
MODULO 2 ADDITION FROM
THE RESULTS OBTAINED
BY PROCESSING "k"
DISCRETE CHAOTIC MAPS,
OBTAINING "$x_n$" — 36

ADD GENERATED NUMBER
"$x_n$" TO SEQUENCE
GENERATED AND STORED
IN OUTPUT REGISTER

END — 37

# FIG. 2

FIG. 3

FIG. 4

FIG. 5

FIG. 6

*Flowchart:*

START

**70** — EXECUTE ORDER TO LOAD THE SEED

**71** — READ SEED CONTAINED IN INPUT REGISTER

**72** — OPEN SIX COMMUTATORS

INITIALIZATION?

— NO →

— YES →

**73** — LOAD SIX MEMORY ELEMENTS WITH THE SEED

**75** — PROCESS SIX DISCRETE CHAOTIC MAPS $f_1(x_{n-1})$, $f_2(x_{n-2})$, $f_3(x_{n-3})$, $f_4(x_{n-4})$, $f_5(x_{n-5})$, $f_6(x_{n-6})$.

**76** — ROTATE THE RESULT OF PROCESSING ON $f_6$, $f_5$, $f_4$, $f_3$, $f_2$ AND $f_1$ 26, 20, 15, 10, 5 AND 0 BIT POSITIONS TO THE RIGHT

**77** — COMPUTE BIT-BY-BIT MODULO 2 ADDITION FROM THE RESULTS OBTAINED BY PROCESSING SIX CHAOTIC MAPS OBTAINING "$x_n$"

**74** — UPDATE CONTENT OF MEMORY ELEMENTS

**74A** — DISCARD CONTENT OF EM6

**74B** — REPLACE CONTENT OF EM2 WITH CONTENT OF EM2-EM6 OF EM1-EM5

**74C** — LOAD VALUE OF GENERATED UNPREDICTABLE PSEUDORANDOM NUMBER "$x_n$" IN EM1

**78** — ADD GENERATED NUMBER "$x_n$" TO SEQUENCE GENERATED AND STORED IN OUTPUT REGISTER

END

FIG. 7

FIG. 8

# INTERNATIONAL SEARCH REPORT

| | International application No. |
|---|---|
| | PCT/ ES 2009/070629 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)

Documentation searched other than minimum documentation to the extent that such documents are included in the fields searched

Electronic data base consulted during the international search (name of data base and, where practicable, search terms used)

INVENES,EPODOC,WPI

**C. DOCUMENTS CONSIDERED TO BE   RELEVANT**

| Category* | Citation of document, with indication, where appropriate, of the relevant passages | Relevant to  claim No. |
|---|---|---|
| A | US 2009248771 A1 (ATMEL CORP) 01.10.2009<br>the whole document. | 1-3 |
| A | Pareek N K; Patidar V; Sud K K. "Discrete chaotic cryptography using external key" PHYSICS LETTERS A Vol 309, Nr 1-2<br>Págs 75 - 82. 17-03-2003. ISSN 0375-9601<br>doi:10.1016/S0375-9601(03)00122-1 | 1-3 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 30 August 2010          (30.08.2010) | **(23/09/2010)** |
| Name and mailing address of the ISA/<br>O.E.P.M.<br><br>Paseo de la Castellana, 75 28071 Madrid, España.<br>Facsimile No.   34 91 3495304 | Authorized officer<br><br>M. Muñoz Sánchez<br><br>Telephone No. +34 91 349 53 49 |

Form PCT/ISA/210 (second sheet) (July 2009)

EP 2 535 803 A1

<table>
<tr><td colspan="2" align="center"><strong>INTERNATIONAL SEARCH REPORT</strong><br>Information on patent family members</td><td colspan="2">International application No.<br><br>PCT/ ES 2009/070629</td></tr>
</table>

| Patent document cited in the search report | Publication date | Patent family member(s) | Publication date |
|---|---|---|---|
| US 2009248771 A | 01.10.2009 | NONE | ------------ |

Form PCT/ISA/210 (patent family annex) (July 2009)

23

**INTERNATIONAL SEARCH REPORT**

International application No.

PCT/ ES 2009/070629

CLASSIFICATION OF SUBJECT MATTER

*G06F 7/58* (2006.01)
*G06N 7/08* (2006.01)

Form PCT/ISA/210 (extra sheeet) (July 2009)